# EUROPEAN PATENT SPECIFICATION

(11) **EP 0 313 161 B1**
(45) Date of publication and mention of the grant of the patent: **12.01.1994**
(21) Application number: 88202319.5
(22) Date of filing: 18.10.1988
(51) Int. Cl.: G01N 27/00

(54) **Sensor with immunochemical membrane chemically bound to a semiconductor device**
Fühler mit einer immunochemischen Membran, die mit einem Halbleiter chemisch verbunden ist
Capteur avec une membrane immunochimique liée chimiquement à un semi-conducteur

(30) Priority: 23.10.1987 IT 2239087
(43) Date of publication of application: 26.04.1989
(73) Proprietor: ENIRICERCHE S.p.A., 20121 Milano (IT)
(72) Inventor: Colapicchioni, Claudio, I-00182 Rome (IT); Giannini, Ivo, I-00165 Rome (IT); Baroncelli, Vittorio, I-00198 Rome (IT); Porcelli, Filippo, I-00167 Rome (IT)
(74) Representative: Fusina, Gerolamo

(56) References cited:
- EP-A- 0 270 174
- GB-A- 2 017 400
- PATENT ABSTRACTS OF JAPAN, vol. 10, no. 119 (P-453)[2176], 6th May 1986; & JP-A-60 247 151

## Description

This invention relates to an antigen sensor responsive to an antigen to which an antibody is specific, said sensor containing an immunochemical membrane, the process for preparing said sensor and the process for practically using it.

In clinical diagnoses, the blood level of metabolytes, hormones, or proteins is currently determined by a number of methods, among which immunofluorescent (FIE, and the like), immunoradiometric (RIA,IRMA and the like) or immunoenzymatic methods (ELISA and the like) can be mentioned. Recently, attention has been directed to the provision of immunosensors using transducers in the form of solid-state devices such as FETs which are capable of sensing extremely small charges which may be present at the transducers's gate. The advantages of such devices are the possibility of miniaturizing them, low costs and prompt responses, along with their extremely high sensitivity, capable of giving 10 mV signals for analyte concentrations as low as from 10⁻⁷ M to 10⁻¹¹ M.

Reference can be had to J.Janata and G.F.Blackburn, "Annals N.Y.Acad. of Sciences", 428, 286 (1984).

Devices have been proposed, in which the antibody is absorbed on the FET gate and the linkage of the antigen to be tested produces an electric charge variation to be recorded by a tranducer: refernce can be had to M.Aizawa, S.Kato and S.Suzuki, J.Membr.Sc., 2, 125 (1977), and to J.Janata and R.J.Huber, "Ion-sensitive Electrodes in Analytical Chemistry" (1980), Freiser,H., editor, 2, 107-174, Plenum Press.

The defect of the immunochemical membranes used in such devices is that they are unstable and prone to interference from chemical species foreign to the antigens to be tested.

Patent Abstracts of Japan, Vol.10, N°119 (P-453) |2176|, 06.MAY.1986, and JP-A-60 247 151 (Fujitsu K.K.) 06-12-1985, disclose another approach in which the antibody concerned is bound directly to a polysiloxane layer.

It has been ascertained by the present applicants that to use protein A, a protein extracted from the cell walls of S.aureus in forming the immunochemical membranes of devices of the kind referred to above affords a number of advantages because protein A is capable of binding an antibody region which is not involved in the link with the antigen, so that a universal immunosensor can be obtained, whose specificity towards the antigen to be tested can be achieved at any time by using the antibody specific therefor and leaving the protein A-containing membrane unaltered. It has also been found that the interference problems referred to above can be obviated by labeling the antibody to be tested, or an antibody directed against said antigen, with an enzyme such as glucose-oxidase or urease, which during the catalyzed reaction produces electric charges to be measured by the transducer (EOS or CHEMFET).

The invention, therefore, provides an antigen-sensor containing an immunochemical membrane and an EOS or a CHEMFET device carrying on its surface silicon oxide adhered to said membrane by means of a polysiloxane matrix, which is characterized in that the immunochemical membrane consists of a layer of protein A polymerized with a supporting biopolymer, whereby an antibody directed against the antigen to be determined is adhered to the protein A by incubating the sensor at room temperature in the presence of the antibody concerned, said layer being chemically bonded to the polysiloxane matrix by the agency of bifunctional coupling agents, said polysiloxane matrix being selected from the functional organosilanes having either the general formula: 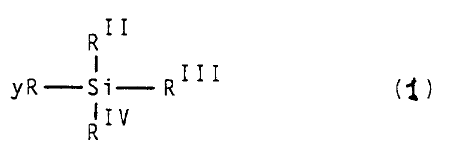
wherein:
R^{II}, R^{III} and R^{IV}, equal to, or different from each other, are C₁-C₁₀ alkoxy groups;
R is (CH₂)ₘ - X -(CH₂)ₙ, in which -X- is -CH₂, or a mono- or a polycondensed aromatic group, or -NH, or -O-, and m and n, which can be equal to, or different from one another, are integers from 0 to 10, with the proviso that zero is excluded is -X- is -NH or -O-, and y is -NH₂, or -OH, or -SH,
or the general formula: 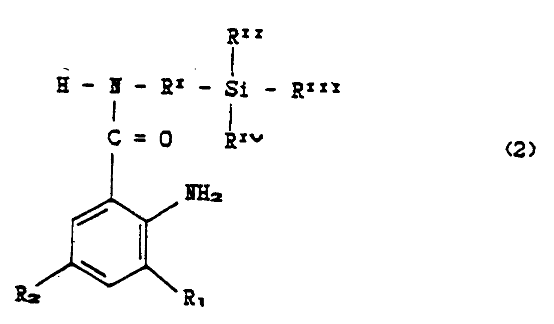
wherein R₁ and R₂, which are equal to, or different from one another, are selected from-Cl, -Br, -CH₃, -NO₂, -NH₂ and -H;
R^{II}, R^{III} and R^{IV} are as hereinabove defined, and R^{I} is selected from C₁-C₁₀ alkyls, aminoalkyls, aminoalkylaryls and alkaryls.

For example, the polysiloxane matrices which can be used are aminoethylaminopropyltrimethoxysilane (AEAPS) or anthranylamidepropyltriethoxysilane. Besides containing silicon oxide on its surface, the EOS device must contain in the part below the silicon oxide a layer of aluminium or gold deposited by evaporation. If a functional organosilane of formula (2) is used, its preparation involves the reaction of isatoic acid anhydride, or a derivative thereof, with aminosilanes of the type: 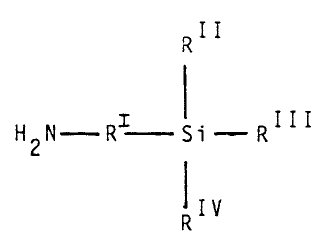
according to the reaction pattern: 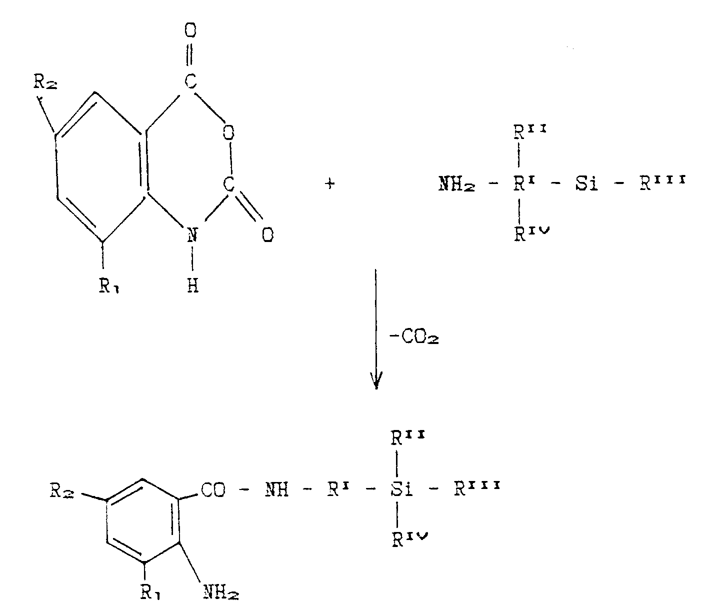
The silanes preferred in practice for preparing the functional organosilane in accordance with the objects of the present invention are:
3-aminopropyltriethoxysilane
H₂N-(CH₂)₃-Si-(OC₂H₅)₃
aminomethyltriethoxysilane
H₂N-CH₂-Si-(OC₂H₅)₃
2-aminoethylaminopropyltrimethoxysilane
H₂N-(CH₂)₂-NH-(CH₂)₃-Si-(OCH₃)₃
2-aminoethylaminopropyltriethoxysilane
H₂N-(CH₂)₂-NH-(CH₂)₃-Si-(OC₂H₅)₃
2-aminoethylaminopropylmethyldimethoxysilane 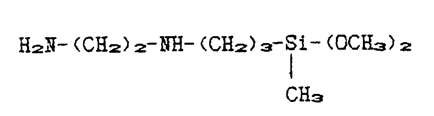
The synthesis reaction is effected by gradually adding the isatoic anhydride to the aminosilane in the presence or absence of solvent. If the reaction is effected in a solvent, this must obviously not react with isatoic anhydride. In the case of hydroxyl solvents mild reaction conditions must for example be used, with no catalyst present.

Alcohols, esters, chlorinated solvents etc. can be used as solvent. No water must be present, as this would obviously hydrolyze the alkoxy groups.

The reaction can also be effected by adding the isatoic anhydride altogether rather than gradually, by virtue of the slight exothermicity of the reaction (it m ust then be cooled), and the fact that in spite of the considerable difference in reactivity between the aliphatic amine (aminosilane) and the aromatic amine (reaction product) a minimum quantity of oligomer products could form, of type: 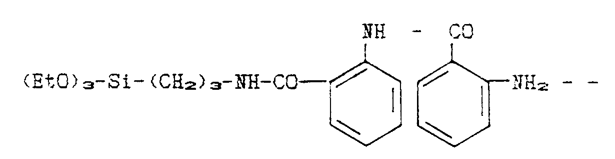
Enzyme types which produce electrical charges during the catalyzed reaction can be introduced into said device.

The supporting biopolymers can be proteins (such as albumin), biopolymers with functional groups (such as polylysine) the protein A being polymerized together with the supporting biopolymers, and an antibody directed against the antigen to be sensed is adhered to the immunochemical membrane
Particularly, the present invention thus also provides a process for forming a sensor as claimed in Claim 1, comprising the steps of:
(a) preparing a siloxane prepolymer and depositing it on an EOS or CHEMFET device using a rotary-disc apparatus;
(b) thermally curing at a temperature of from 80°C to 140°C the prepolymer exiting step (a) to completely polymerize it by hydrolyzing the silane alkoxy groups;
(c) chemically adhering the polysiloxane matrix thus obtained to the silicon oxide surface layer of said EOS or CHEMFET device by reacting other alkoxy groups with Si-OH groups present on said surface;
(d) activating the aliphatic amino groups present on the polysiloxane layer with a bifunctional coupling agent;
(e) separately, partially polymerizing protein A with a support biopolymer using bifunctional coupling agents to obtain an immunochemical prepolymer;
(f) adhering said prepolymer to said polysiloxane layer by reaction with said activated amino groups, and
(g) adhering an antibody specific to the antigen to be sensed by incubating the sensor at room temperature for a time of from half-hour to 1,5 hours.

The thermal curing (80-140°C) of the silane prepolymer is followed by an immunochemical immobilization treatment at 25°C-37°C.

The siloxane prepolymer has a thickness of from 0,5 µm to 3 µm, and the finished immunochemical membrane is from 0,5 µm to 2µm thick.

The rotary disc apparatus must operate preferably at a speed of between 400 and 4500 rpm.

The concentration of the antibody in the adhering step is from 0,5 mg/l to 1,5 mg/l and the pH of the buffer solution is of from 6,5 to 7,5.

An adhered antibody can be removed and, if so desired, replaced by another antibody, by the agency of an acidic buffer solution, having a pH of from 1,5 to 2,5 for a time of from half-hour to 1,5 hours, at the ambient temperature.

According to another aspect, the invention provides a process for determining, by the antigen-sensor as hereinbefore defined, the concentration of an antigen in a solution containing it, comprising the steps of:
(1) labeling the antigen to be detected with an enzyme to form an antigen-enzyme conjugate competing, for the binding sites of the antibody immobilized on the device, with the antigen to be tested, thus producing electric charges detected by the sensor during the catalyzed reactions, and
(2) measuring the electric charges generated in step (1) by an electronic MOS or MOSFET transducer. The labeling of the antigen with an enzyme such as glucose-oxidase or urease is made to determine the concentration of the antigen as the antigen-enzyme conjugate competes with the antigen.

The result is the generation of electric charges to be measured by the transducer concerned, and the electric response of the enzyme in the presence of its substrate determines the amount of labeled antigen adhered to the immunochemical membrane, and is inversely proportional to the amount of antigen to be tested as present in the solution.

According to another aspect, the invention provides an alternative process for determining, by the antigen-sensor as hereinbefore defined, the concentration of an antigen in a solution containing it, comprising the steps of:
(1) adding to the solution an antibody directed to the antigen concerned, said antibody having been labeled with an enzyme which, in the presence of its substrate, produces electric charges detected by the sensor during the catalyzed reaction, and
(2) measuring the electric charges generated in step (1) by an electronic MOS or MOSFET transducer. Once that the antigen has been bound to the antibody immobilized on the device, the enzyme-labeled antiboby is introduced and, in this case, the amount of the antigen to be tested is directly proportional to the amount of labeled antibody bound to the antigen, and the electric response of the enzyme as metered by the transducer determines the antigen concentration sought for.

The metering procedures aforementioned are less interference-prone relative to substances foreign to the antigen to be tested, such as ions or proteins which may be present in the tested samples, since the measurements are taken in terms of electric response of the labeling enzyme.

The ensuing examples are illustrative of the invention.

### EXAMPLE 1

An immunosensor was prepared, comprising an immunochemical membrane containing the protein A chemically bound to a polysiloxane matrix.

A solution of a polysiloxane, which had partially been hydrolyzed in a hydroalcoholic environment was deposited on 1 cm x 1 cm bars of an EOS device, said solution consisting of:
21% of amino-ethylaminopropyltrimethoxysilane (AEAPS);
3% of acetic acid;
1% of H₂O,
in absolute ethanol.

Three depositions were made by means of a rotary disc apparatus rotated at 3500 rpm for 20 s.

The excess oligomer solution deposited on the EOS device was removed by the centrifugal force generated by the rotation of the supporting plate. After thermal curing for 16 h at 120°C, the bars were cooled and placed in a weighing bottle in a 0,02 M, pH 7, phosphate buffer solution containing 1% of glutaraldehyde, the bottle containing the bars being then placed onto an oscillating plate for 1,5 h at the ambient temperature.

Thereafter, the bars were washed with the phosphate buffer and distilled water.

Separately, to achieve a partial polymerization with the biopolymer, 1 mg of protein A was reacted with 4 mg of polylisine in 2 ml of of 0,02 M of a pH 7 phosphate buffer for 30 min at the ambient temperature in the presence of 0,5% of glutaraldehyde, whereafter the anti-human IgG antibody was added to the immunochemical device, by incubating the sensor in the presence of said antibody, at an antibody concentration of 1mg/ml in a 0,02 M, pH 7 phosphate buffer for 1 hour at the ambient temperature, whereafter a washing with the same buffer was carried out.

### EXAMPLE 2

This example demonstrates the method for determining the concentration of the human IgG (HIgG) antigen by tagging the antigen with the enzyme glucose-oxidase (GOD).

Preparation of human IgG (HIgG)/glucose-oxidase (GOD) conjugates:
10 mg of HIgG are reacted with 30 mg of GOD in 2 ml of 0.02 M pH 7 phosphate buffer while stirring at ambient temperature in the presence of 0.2% glutaraldehyde.

The conjugate is then passed through a protein A/sepharose column, and washed repeatedly with 0.02 M pH 7 phosphate buffer until eluate 280 nm absorption becomes negligible.

The conjugate bound to the column is then eluted with 0.1 M pH 2.2 glycine-HCl buffer and dialyzed against 0.02 M pH 7 phosphate buffer.

The conjugate GOD absorption at 280 nm is calculated, it being 10 times greater than that measured at 450 nm, a region in which there is no appreciable absorption of human immunoglobulins (HIgG).

The HIgG absorption is then obtained as the difference between the total conjugate absorption and the GOD absorption. The final molar ratio of enzyme (GOD) to HIgG varies between about 1:1 and 2:1.

Figure 1 shows the absorption spectra (A = absorbance) of an HIgG-GOD conjugate (line A) and of a GOD solution (line b) having the same absorption as the conjugate at 450 nm.

Figure 2 shows the enzymatic activity with time (in days = d) expressed as µg of substrate transformed per minute per cm² of HIgG-GOD conjugates for a series of 6 samples.

The samples are incubated in 1 ml of a solution containing 0.5 mg/ml of the HIgG-GOD conjugate in 0.02 M pH 7 phosphate buffer for 2 hours at 25°C.

The samples are washed and the enzymatic activity of the conjugate GOD is measured by measuring the reduction in substrate (glucose) with the commercial Boehringer kit.

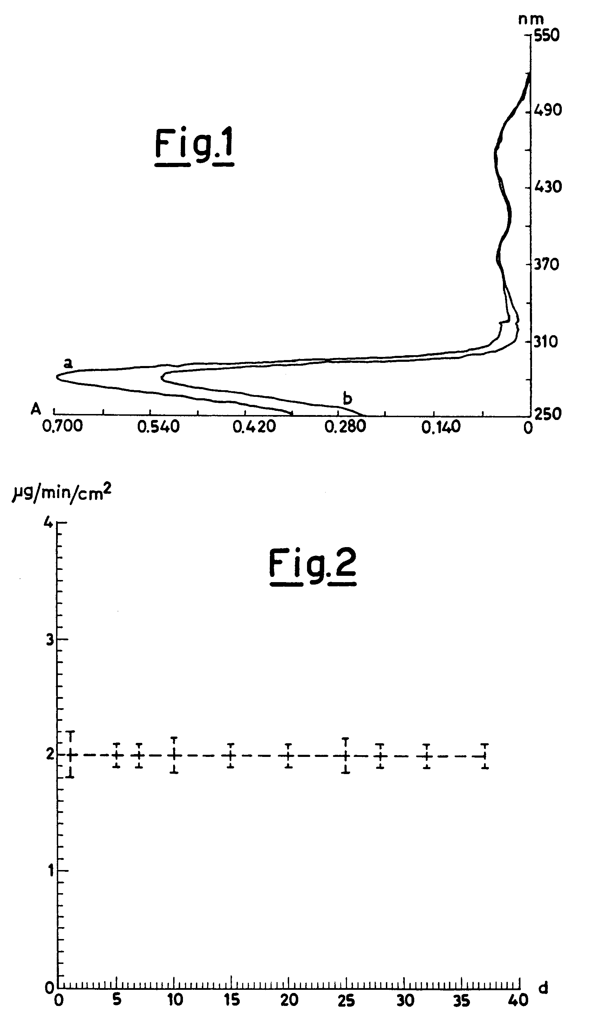

As can be seen from Figure 2, the biological functionality of the immunochemical membrane immobilized on EOS devices preserved in pH 7 phosphate buffer remains constant for at least one month.

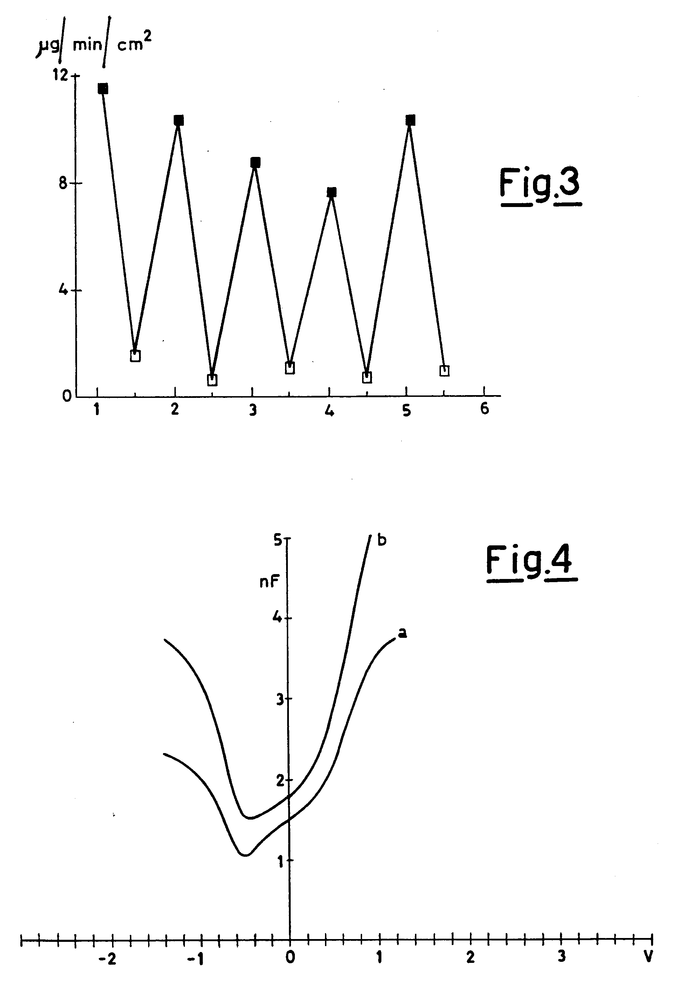

Figure 3 shows the tests on the reversibility of the bond between protein A and the antibody, as the average of a series of different samples, using the described HIgG-GOD conjugates. The EOS devices, on which the immunochemical membrane containing protein A is present, are incubated with the HIgG-GOD conjugates and their enzymatic activity, represented by a black square, is measured as already described.

Separation of the conjugate from the protein A is effected by means of a glycine-0.1 M pH 2.2 HCl buffer and is verified by measuring the enzymatic activity, represented by a white square. As can be seen from the figure, good separation of the HIgG-GOD conjugate and restoration of the bond with the protein A is indicated (the vertical axis represents enzymatic activity in µg/min/cm² and the horizontal axis represents the number of tests carried out on the same sample).

Capacitance/voltage curves are generally used in semiconductor technology to study the silicon oxide characteristics during the construction of field effect transistors (FET).

Figure 4 shows curves of capacitance in nF against voltage in V at 15 Hz of an EOS device on which an immunochemical membrane has been immobilised consisting of protein A polymerized together with bovine albumin (BSA) to which the HIgG-GOD conjugate prepared in the aforegoing manner has been added.

When the HIgG-GOD conjugate has been bound to the immunochemical membrane of the EOS device the activity of the enzyme (GOD) produces electrical charges on the surface of the device (gluconic acid in the case of glucose-oxidase) which determine displacement of the capacitance minimum.

As can be seen in the figure (line a), after adding the substrate (glucose) there is displacement (line b) of the capacitance minimum by about 60 mv, which indicates the electrical response of the conjugate bound to the immunochemical membrane and thus the possibility of implementing the system of measurement as heretofore described.

## Claims

1. An antigen-sensor containing an immunochemical membrane and an EOS or a CHEMFET device carrying on its surface silicon oxide adhered to said membrane by means of a polysiloxane matrix, characterized in that the immunochemical membrane consists of a layer of protein A polymerized with a supporting biopolymer, whereby an antibody directed against the antigen to be determined is adhered to the protein A by incubating the sensor at room temperature in the presence of the antibody concerned, said layer being chemically bonded to the polysiloxane matrix by the agency of bifunctional coupling agents, said polysiloxane matrix being selected from the functional organosilanes having either the general formula: 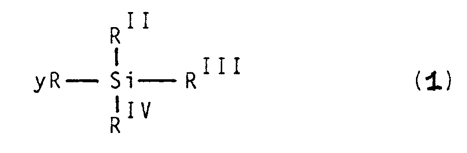 wherein:
R^{II}, R^{III} and R^{IV}, equal to, or different from each other, are C₁-C₁₀ alkoxy groups;
R is (CH₂)ₘ - X -(CH₂)ₙ, in which -X- is -CH₂, or a mono- or a polycondensed aromatic group, or -NH, or -O-, and m and n, which can be equal to, or different from one another, are integers from 0 to 10, with the proviso that zero is excluded is -X- is -NH or -O-, and y is -NH₂, or -OH, or -SH,
or the general formula: 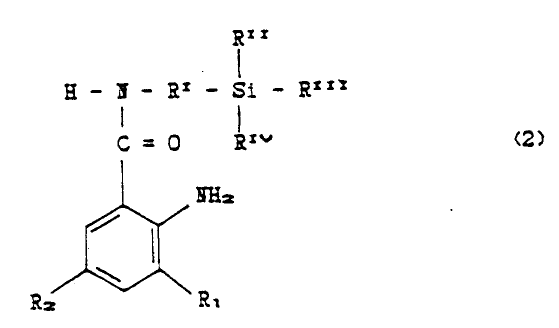 wherein R₁ and R₂, which are equal to, or different from one another, are selected from-Cl, -Br, -CH₃, -NO₂, -NH₂ and -H;
R^{II}, R^{III} and R^{IV} are as hereinabove defined, and R^{I} is selected from C₁-C₁₀ alkyls, aminoalkyls, aminoalkylaryls and alkaryls.

2. A process for forming a sensor as claimed in Claim 1, comprising the steps of:
(a) preparing a siloxane prepolymer and depositing it on an EOS or CHEMFET device using a rotary-disc apparatus;
(b) thermally curing at a temperature of from 80°C to 140°C the prepolymer exiting step (a) to completely polymerize it by hydrolyzing the silane alkoxy groups;
(c) chemically adhering the polysiloxane matrix thus obtained to the silicon oxide surface layer of said EOS or CHEMFET device by reacting other alkoxy groups with Si-OH groups present on said surface;
(d) activating the aliphatic amino groups present on the polysiloxane layer with a bifunctional coupling agent;
(e) separately, partially polymerizing protein A with a support biopolymer using bifunctional coupling agents to obtain an immunochemical prepolymer;
(f) adhering said prepolymer to said polysiloxane layer by reaction with said activated amino groups, and
(g) adhering an antibody specific to the antigen to be sensed by incubating the sensor at room temperature for a time of from half-hour to 1,5 hours.

3. Process according to Claim 2, wherein the thickness of the siloxane prepolymer exiting step (a) is of from 0,5 µm to 3 µm.

4. Process according to Claim 2, wherein the rotation speed of the rotary disc in step (a) is from 400 rpm to 4.500 rpm.

5. Process according to Claim 2, wherein the bifunctional coupling agent used in steps (d) and (e) is selected from the aldehydes and the diisocyanates.

6. Process according to Claims 2 and 5, wherein the bifunctional coupling agent is glutaraldehyde.

7. Process according to Claims 2 and 5, wherein the bifunctional coupling agent is toluene-2,4-diisocyanate.

8. Process according to Claim 2, wherein the supporting biopolymer is polylisine.

9. Process according to Claim 2, wherein the concentration of the antibody in step (f) is from 0,5 to 1,0 mg/ml in a buffer solution having a pH of from 6,5 to 7,5.

10. Process for determining, by the antigen-sensor as defined in Claim 1, the concentration of an antigen in a solution containing it, comprising the steps of:
(1) labeling the antigen to be detected with an enzyme to form an antigen-enzyme conjugate competing, for the binding sites of the antibody immobilized on the device, with the antigen to be tested, thus producing electric charges detected by the sensor during the catalyzed reaction, and
(2) measuring the electric charges generated in step (1) by an electronic MOS or MOSFET transducer.

11. Process for determining, by the antigen-sensor as defined in Claim 1, the concentration of an antigen in a solution containing it, comprising the steps of:
(1) adding to the solution an antibody directed to the antigen concerned, said antibody having been labeled with an enzyme which, in the presence of its substrate, produces electric charges detected by the sensor during the catalyzed reaction, and
(2) measuring the electric charges generated in step (1) by an electronic MOS or MOSFET transducer.

12. Process according to Claim 10, or Claim 11, wherein the labeling enzyme is selected from glucose-oxidase and urease.

## Patentansprüche

1. Antigen-Sensor, welcher eine immunchemische Membran und eine EOS-Vorrichtung oder eine CHEMFET-Vorrichtung enthält, welche letztgenannte auf ihrer Oberfläche Siliciumoxid trägt, welches an dieser Membran mittels einer Polysiloxanmatrix anhaftet, dadurch gekennzeichnet, daß die immunchemische Membran aus einer Schicht von Protein A besteht, welches mit einem biologischen Trägerpolymer polymerisiert ist, wobei ein gegen das zu bestimmende Antigen gerichteter Antikörper dadurch an das Protein A angeheftet worden ist, daß man den Sensor bei Zimmertemperatur in Gegenwart des betreffenden Antikörpers inkubiert, und wobei die genannte Schicht durch Vermittlung bifunktioneller Kupplungsmittel an die Polysiloxanmatrix chemisch gebunden worden ist, und wobei die Polysiloxanmatrix aus funktionellen Organosilanen ausgewählt worden ist, welche entweder die allgemeine Formel: 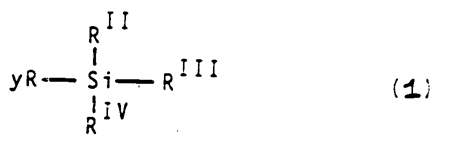 worin:
R^{II}, R^{III} und R^{IV}, welche gleich oder voneinander verschieden sind, C₁-C₁₀-Alkoxygruppen darstellen;
R für (CH₂)ₘ - X - (CH₂)ₙ steht, worin -X- für -CH₂, für eine mono- oder eine polykondensierte aromatische Gruppe oder für -NH- oder -O- steht, und worin die Symbole m und n, welche gleich oder voneinander verschieden sein können, ganze Zahlen von 0 bis 10 darstellen, mit der Maßgabe, daß die Bedeutung Null dann ausgeschlossen ist, wenn -X- für -NH- oder für -O-steht, und worin y für -NH₂ oder für -OH oder für -SH steht;
oder die allgemeine Formel: 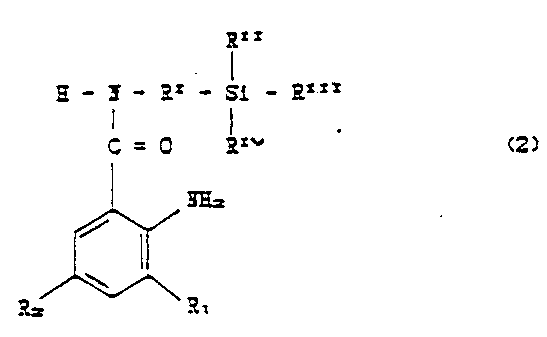 worin R₁ und R₂, welche gleich oder voneinander verschieden sind, aus -Cl, -Br, -CH₃, -NO₂, -NH₂ und -H ausgewählt sind;
R^{II}, R^{III} und R^{IV} wie oben definiert sind und R^{I} aus C₁-C₁₀-Alkyl-, Aminoalkyl-, Aminoalkylaryl- und Alkarylgruppen ausgewählt ist, aufweisen.

2. Verfahren zum Ausbilden eines wie in Anspruch 1 beanspruchten Sensors, welches die folgenden Stufen umfaßt:
(a) Herstellen eines Siloxan-Vorpolymerisates und Aufbringen desselben auf eine EOS- oder CHEMFET-Vorrichtung unter Verwendung einer Drehscheibenvorrichtung;
(b) thermisches Aushärten des in der Stufe (a) erhaltenen Vorpolymerisates bei einer Temperatur von 80°C bis 140°C, um dasselbe durch Hydrolysieren der Silanalkoxygruppen vollständig zu polymerisieren;
(c) chemisches Anheften der so erhaltenen Polysiloxanmatrix an die Siliciumoxidoberflächenschicht der EOS- oder CHEMFET-Vorrichtung durch Umsetzen von anderen Alkoxygruppen mit den auf dieser Oberfläche vorhandenen Si-OH-Gruppen;
(d) Aktivieren der auf der Polysiloxanschicht vorhandenen aliphatischen Aminogruppen mit einem bifunktionellen Kupplungsmittel;
(e) das getrennt hievon vorgenommene partielle Polymerisieren von Protein A mit einem biologischen Trägerpolymer unter Verwendung von bifunktionellen Kupplungsmitteln zur Erzielung eines immunchemischen Vorpolymerisates;
(f) Anheften dieses Vorpolymerisates an der Polysiloxanschicht durch Umsetzen mit den aktivierten Aminogruppen, und
(g) Anheften eines für das zu erfühlende Antigen spezifischen Antikörpers durch Inkubieren mit dem Sensor bei Zimmertemperatur während einer Zeitspanne von einer halben Stunde bis zu 1,5 Stunden.

3. Verfahren nach Anspruch 2, wobei die Dicke des in der Stufe (a) erhaltenen Siloxan-Vorpolymerisates 0.5 µm bis 3 µm beträgt.

4. Verfahren nach Anspruch 2, wobei die Drehgeschwindigkeit der Drehscheibe in der Stufe (a) 400 U/min bei 4500 U/min beträgt.

5. Verfahren nach Anspruch 2, wobei das in den Stufen (d) und (e) verwendete bifunktionelle Kupplungsmittel aus Aldehyden und Diisocyanaten ausgewählt wird.

6. Verfahren nach den Ansprüchen 2 und 5, wobei das bifunktionelle Kupplungsmittel Glutaraldehyd ist.

7. Verfahren nach den Ansprüchen 2 und 5, wobei das bifunktionelle Kupplungsmittel Toluol-2,4-diisocyanat ist.

8. Verfahren nach Anspruch 2, wobei das biologische Trägerpolymer Polylysin ist.

9. Verfahren nach Anspruch 2, wobei die Konzentration des Antikörpers in der Stufe (f) 0,5 bis 1.0 mg/ml in einer Pufferlösung mit einem pH-Wert von 6,5 bis 7,5 beträgt.

10. Verfahren zur Bestimmung der Konzentration eines Antigens in einer dasselbe enthaltenden Lösung, mit dem im Anspruch 1 definierten Antigen-Sensor, welches die folgenden Stufen umfaßt:
(1) Markieren des nachzuweisenden Antigens mit einem Enzym zur Bildung eines Antigen-Enzym-Konjugates, welches mit dem zu prüfenden Antigen um die Bindungsstellen des auf der Vorrichtung immobilisierten Antikörpers konkurriert, wobei elektrische Ladungen erzeugt werden, welche während der katalysierten Umsetzung von dem Sensor nachgewiesen werden, und
(2) Messen der in der Stufe (1) erzeugten elektrischen Ladungen mit einem elektronischen MOS- oder MOSFET-Wandler.

11. Verfahren zur Bestimmung der Konzentration eines Antigens in einer dasselbe enthaltenden Lösung, mit dem im Anspruch 1 definierten Antigen-Sensor, welches die folgenden Stufen umfaßt:
(1) Hinzufügen eines gegen das betreffende Antigen gerichteten Antikörpers zu der Lösung, welcher Antikörper mit einem Enzym markiert worden ist, welches in Gegenwart des entsprechenden Enzym-Substrates elektrische Ladungen erzeugt, welche von dem Sensor während der katalysierten Umsetzung nachgewiesen werden, und
(2) Messen der in der Stufe (1) erzeugten elektrischen Ladungen mit einem elektronischen MOS- oder MOSFET-Wandler.

12. Verfahren nach Anspruch 10 oder 11, wobei das zum Markieren verwendete Enzym aus Glucoseoxidase und Urease ausgewählt wird.

## Revendications

1. Capteur à antigène, contenant une membrane immunochimique et un dispositif EOS ou CHEMFET qui porte sur sa surface de l'oxyde de silicium qui adhère à ladite membrane par l'intermédiaire d'une matrice en polysiloxane, **caractérisé** en ce que la membrane immunochimique est constituée d'une couche de protéine A polymérisée avec un biopolymère de support, un anticorps dirigé contre l'antigène que l'on veut détecter étant fixé à la protéine A par incubation du capteur à la température ambiante en présence de l'anticorps concerné, ladite couche étant chimiquement liée à la matrice de polysiloxane par l'intermédiaire d'agents bifonctionnels de couplage, ladite matrice de polysiloxane étant choisie parmi les organosilanes fonctionnels ayant soit la formule générale 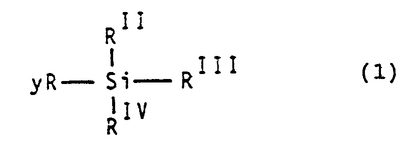 dans laquelle R^{II}, R^{III} et R^{IV}, identiques ou différents les uns des autres, représentent des groupes alcoxy en C₁-C₁₀, et R représente -(CH₂)ₘ-X-(CH₂)ₙ-, où -X-représente -CH₂- ou un groupe aromatique comportant un cycle ou plusieurs cycles condensés, ou encore -NH- ou -O-, et m et n, qui peuvent être égaux ou différents l'un de l'autre, représentent des nombres entiers valant de 0 à 10, à condition que la valeur 0 soit exclue lorsque -X-représente -NH- ou -O-, et y représente -NH₂, -OH ou -SH, soit la formule générale 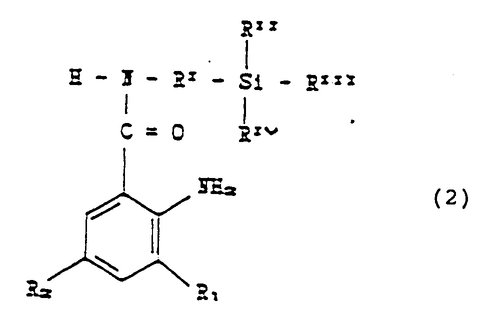 dans laquelle R₁ et R₂, qui sont identiques ou différents l'un de l'autre, sont choisis parmi -Cl, -Br, -CH₃, -NO₂, -NH₂ et -H, R^{II}, R^{III} et R^{IV} sont tels qu'on les a définis ci-dessus, et R^{I} est choisi parmi les groupes alkyle en C₁-C₁₀, aminoalkyle, aminoalkylaryle et alkylaryle.

2. Procédé de fabrication d'un capteur conforme à la revendication 1, comprenant les étapes consistant à :
(a) préparer un prépolymère de type siloxane et le déposer sur un dispositif EOS ou CHEMFET, à l'aide d'un appareil à disque rotatif ;
(b) faire durcir thermiquement, à une température de 80°C à 140°C, le prépolymère issu de l'étape (a), pour le faire complètement polymériser par hydrolyse de groupes alcoxy du silane ;
(c) faire adhérer chimiquement la matrice de polysiloxane ainsi obtenue à la couche superficielle d'oxyde de silicium dudit dispositif EOS ou CHEMFET, en faisant réagir d'autres groupes alcoxy avec des groupes -Si-OH, présents sur ladite surface ;
(d) activer les groupes aminoaliphatiques présents sur la couche de polysiloxane, à l'aide d'un agent bifonctionnel de couplage ;
(e) faire partiellement polymériser, à part, une protéine A avec un biopolymère de support, à l'aide d'agents bifonctionnels de couplage, pour obtenir un prépolymère immunochimique ;
(f) faire adhérer ce prépolymère à ladite couche de polysiloxane, par réaction avec lesdits groupes amino activés ; et
(g) fixer un anticorps spécifique de l'antigène que l'on veut détecter, par incubation du capteur à la température ambiante pendant un laps de temps allant d'une demi-heure à une heure et demie.

3. Procédé conforme à la revendication 2, dans lequel l'épaisseur de la couche de prépolymère de type siloxane issue de l'étape (a) vaut de 0,5 µm à 3 µm.

4. Procédé conforme à la revendication 2, dans lequel la vitesse de rotation du disque rotatif utilisé dans l'étape (a) vaut de 400 t/min à 4500 t/min.

5. Procédé conforme à la revendication 2, dans lequel l'agent bifonctionnel de couplage utilisé dans les étapes (d) et (e) est choisi parmi les aldéhydes et les diisocyanates.

6. Procédé conforme aux revendications 2 et 5, dans lequel l'agent bifonctionnel de couplage est du glutaraldéhyde.

7. Procédé conforme aux revendications 2 et 5, dans lequel l'agent bifonctionnel de couplage est du 2,4-diisocyanato-toluène.

8. Procédé conforme à la revendication 2, dans lequel le biopolymère de support est de la polylysine.

9. Procédé conforme à la revendication 2, dans lequel la concentration de l'anticorps, dans l'étape (f), vaut de 0,5 à 1,0 mg/ml, dans une solution tampon dont le pH vaut de 6,5 à 7,5.

10. Procédé de détermination, à l'aide du capteur à antigène défini dans la revendication 1, de la concentration d'un antigène dans une solution qui en contient, comprenant les étapes consistant à :
(1) marquer l'antigène à détecter avec une enzyme, pour former un conjugué antigène-enzyme qui entre compétition, pour les sites de liaison de l'anticorps immobilisé sur le dispositif, avec l'antigène à tester, produisant ainsi des charges électriques détectées par le capteur au cours de la réaction catalysée, et
(2) mesurer les charges électriques produites dans l'étape (1) à l'aide d'un transducteur électronique MOS ou MOSFET.

11. Procédé de détermination, à l'aide du capteur à antigène défini dans la revendication 1, de la concentration d'un antigène dans une solution qui en contient, comprenant les étapes consistant à :
(1) ajouter à la solution un anticorps dirigé contre l'antigène concerné, ledit anticorps ayant été marqué à l'aide d'une enzyme qui, en présence de son substrat, produit des charges électriques détectées par le capteur au cours de la réaction catalysée, et
(2) mesurer les charges électriques produites dans l'étape (1), à l'aide d'un transducteur électronique MOS ou MOSFET.

12. Procédé conforme à la revendication 10 ou 11, dans lequel l'enzyme de marquage est choisie parmi la glucose-oxydase et l'uréase.
